# EUROPÄISCHE PATENTSCHRIFT

(11) **EP 0 691 225 B1**
(45) Veröffentlichungstag und Bekanntmachung des Hinweises auf die Patenterteilung: **15.12.1999**
(21) Anmeldenummer: 95104027.8
(22) Anmeldetag: 18.03.1995
(51) Int. Cl.: B60G 3/22, B60G 3/26, B60G 7/00

(54) **Einzelradaufhängung für ein Kfz-Rad, insbesondere für ein Hinterrad**
Independent suspension for a motor vehicle wheel, especially for a rear wheel
Suspension indépendante pour une roue de véhicule automobile, notamment pour une roue arrière

(30) Priorität: 07.07.1994 DE 4423993
(43) Veröffentlichungstag der Anmeldung: 10.01.1996
(73) Patentinhaber: Volkswagen Aktiengesellschaft, 38436 Wolfsburg (DE)
(72) Erfinder: Winter, Ingo, Dipl.-Ing., D-38550 Isenbüttel (DE)

(56) Entgegenhaltungen:
- DE-A- 1 430 793
- DE-A- 3 634 090
- FR-A- 2 325 529
- FR-A- 2 470 700

## Beschreibung

Die Erfindung betrifft eine Einzelradaufhängung für ein Kfz-Rad, insbesondere für ein Hinterrad der im Oberbegriff der Patentansprüche 1 und 2 genannten Art.

Eine derartige Einzelradaufhängung ist insbesondere für angetriebene Hinterachsen beispielsweise aus der DE 41 32 901 A1 bekannt. Bei dieser bekannten Einzelradaufhängung ist u. a. eine aus einem unteren und einem oberen stabförmigen Querlenker bestehende radführende Querlenkeranordnung vorgesehen. Zur Anlenkung der in Fahrtrichtung gepfeilt angeordneten, d. h. zumindest annähernd in einer schräg zur Fahrzeugquerachse ausgerichteten Vertikalebene liegenden beiden Querlenker sind insgesamt vier Lenkerlager vorgesehen, nämlich jeweils zwei in verschiedenen Horizontalebenen liegende radseitige Lager mit etwa horizontal verlaufenden Lagerachsen zur Anlenkung des Radträgers sowie ebenfalls in verschiedenen Horizontalebenen liegende aufbauseitige Lager mit ebenfalls etwa horizontalen Lagerachsen zur Anlenkung am Fahrzeugaufbau.

Zur radseitigen Abstützung der zwischen Fahrzeugaufbau und Radaufhängung wirksamen Tragfeder, d. h. Feder-/Dämpfer-Vorrichtung ist ein zusätzlicher nicht radführender Querlenker vorgesehen, der am Radträger und am Fahrzeugaufbau mittels besonders weicher Gummilager bzw. mit Hilfe eines Pendellenkers angelenkt ist.

Durch die Trennung der Funktion der Radführung einerseits und der Funktion der Fahrzeugfederung und -dämpfung andererseits soll insbesondere das Steuerverhalten des Rades besser, nämlich unabhängig vom Federungskomfort optimiert werden können.

Abgesehen von den Lagern für die aufbauseitige Abstützung der Tragfeder und des Stoßdämpfers werden hierbei insgesamt vier weitere aufbauseitige Lager zur Anlenkung der verschiedenen radführenden Lenker sowie des nicht radführenden Lenkers benötigt, für die am Fahrzeugaufbau eine entsprechende Anzahl ausreichend tragfähiger Befestigungsbereiche zur Verfügung stehen müssen.

Vier aufbauseitige Lenkerlager sind auch bei einer anderen bekannten Einzelradaufhängung mit einem mit dem Radträger nicht gelenkig verbundenen biege- und verdrehsteifen radführenden Längslenker (EP 0 193 090 B1) vorgesehen. Bei dieser bekannten Einzelradaufhängung sind nämlich neben dem radführenden Längslenker - jeweils ungepfeilt, d. h. etwa in Fahrzeugquerrichtung ausgerichtet - ein stabförmiger oberer sowie zwei zueinander beabstandete untere Querlenker vorgesehen, die jeweils mit einem Ende mittels üblicher gummielastischer Lager am Radträger und mit dem anderen Ende mittels üblicher gummielastischer Lager am Fahrzeugaufbau bzw. an einem mit diesem elastisch verbundenen Hilfsrahmen angelenkt sind, wobei eine der Fahrzeugfederung dienende Feder-Dämpfer-Vorrichtung sich auf einem der beiden radführenden unteren Querlenker abstützt.

Bei einer anderen bekannten Einzelradaufhängung (DE 30 43 092 A1) mit einem starr mit dem Radträger verbundenen verdrehsteifen Längslenker sind ein stabförmiger oberer und ein stabförmiger unterer Querlenker nicht gepfeilt, d. h. in etwa in Fahrzeugquerrichtung verlaufend angeordnet und jeweils mittels gummielastischer Lager einerseits am Radträger und andererseits am Fahrzeugaufbau angelenkt, so daß für die unmittelbare aufbauseitige Abstützung der drei radführenden Lenker dieser Einzelradaufhängung nur drei ausreichend tragfähige Aufbaubereiche benötigt werden; ein weiteres aufbauseitiges Lager in einem entsprechend tragfähigen Aufbaubereich wird allerdings zur Abstützung eines zusätzlichen Hilfs- oder Führungslenkers benötigt, der am aufbauseitigen Längslenkerende - in einem gewissen Abstand zur Schwenkachse des Lenkerlagers - angelenkt ist und über die Schwenkbewegungen des Längslenkers am ein- und ausfedernden Rad eine für die Fahrstabilität des Fahrzeugs vorteilhafte definierte Vorspuränderung bewirkt.

Ein solcher zusätzlicher Hilfs- oder Führungslenker zur Vorspurbeeinflussung ist bei einer anderen bekannten Einzelradaufhängung mit einem starr am Radträger befestigten Längslenker (DE 36 23 847 C2) nicht vorgesehen. Dort werden allein durch eine geeignete räumliche Ausrichtung des radführenden Längslenkers und eines jeweils in Fahrtrichtung gepfeilt angeordneten oberen und unteren radführenden Querlenkers sowie durch eine entsprechende Bemessung der verschiedenen gummielastischen Lenkerlager unter dem Einfluß von Brems- und/oder Seitenkräften für die Fahrstabilität des Fahrzeugs vorteilhafte Vorspuränderungen erzeugt.

Bei dieser bekannten Einzelradaufhängung, bei der eine der Fahrzeugfederung dienende Feder-Dämpfer-Vorrichtung am Radträger selbst abgestützt ist, sind somit zur schwenkbaren Anlenkung der drei radführenden Lenker drei aufbauseitige Lenkerlager erforderlich, die in entsprechend tragfähigen Aufbaubereichen unterzubringen sind. Im dargestellten Ausführungsbeispiel sind die Lenker an einem entsprechend steifen Fahrschemel angelenkt, der seinerseits elastisch mit dem Fahrzeugaufbau verbunden ist.

Außerdem ist aus der DE-A-1430793 bekannt, eine Einzelradaufhängung für ein Kraftfahrzeug-Hinterrad mit einem mit den Radträger nicht gelenkig verbundenen radführenden Längslenker auszubilden und eine in Fahrtrichtung gepfeilt ausgebildete radführende Querlenkeranordnung vorzusehen, welche am Radträger mittels einer sturzabstützenden Lageranordnung angelenkt ist, sowie die Einzelradaufhängung mit einer zwischen dem Fahrzeugaufbau und einem der lenkerabstützenden Feder-Dämpfer-Vorrichtung auszustatten, wobei die Querlenkeranordnung durch nur einen einstöckigen Querlenker gebildet ist, der am Fahrzeugaufbau mittels nur eines Lagers angelenkt ist, und bei dem die Feder-Dämpfer-Vorrichtung unmittelbar auf dem radführenden Querlenker abgestützt ist.

Letztlich ist aus der FR-A-2325529 bekannt, eine Einzelradaufhängung derart auszubilden, daß zur schwenkbaren Anlenkung des Längslenkers am Fahrzeugaufbau ein Gummi-Metall-Lager mit in zwei Ebenen schräg angestellter Längsachse vorgesehen ist, die derart orientiert ist, daß diese in Fahrtrichtung gesehen von außen/oben nach innen/unten und in der Fahrzeugdraufsicht von vorn/außen nach hinten/innen verläuft.

Vor diesem Hintergrund liegt der Erfindung nun die Aufgabe zugrunde, eine möglichst einfache und möglichst leichte Einzelradaufhängung der im Oberbegriff der Patentansprüche 1 und 2 genannten Art zu schaffen, die einerseits möglichst geringen Bauraum benötigt und andererseits gute Möglichkeiten zur Erzielung einer gewünschten Vorspurbeeinflussung beim Bremsen und/oder unter der Einwirkung von Seitenkräften bietet.

Diese Aufgabe wird erfindungsgemäß durch die Merkmale der Patentansprüche 1 und 2 gelöst. Vorteilhafte Ausgestaltungen und Weiterbildungen der Erfindung sind in den Unteransprüchen angegeben.

Anhand eines in der Zeichnung dargestellten Ausführungsbeispiels wird die Erfindung nachstehend näher erläutert.

In der zum Teil prinzipienhaften und stark vereinfachten Zeichnung zeigen
**Figur 1** die Draufsicht einer erfindungsgemäßen Einzelradaufhängung,
**Figur 2** eine Ansicht dieser Einzelradaufhängung in Fahrtrichtung gesehen und

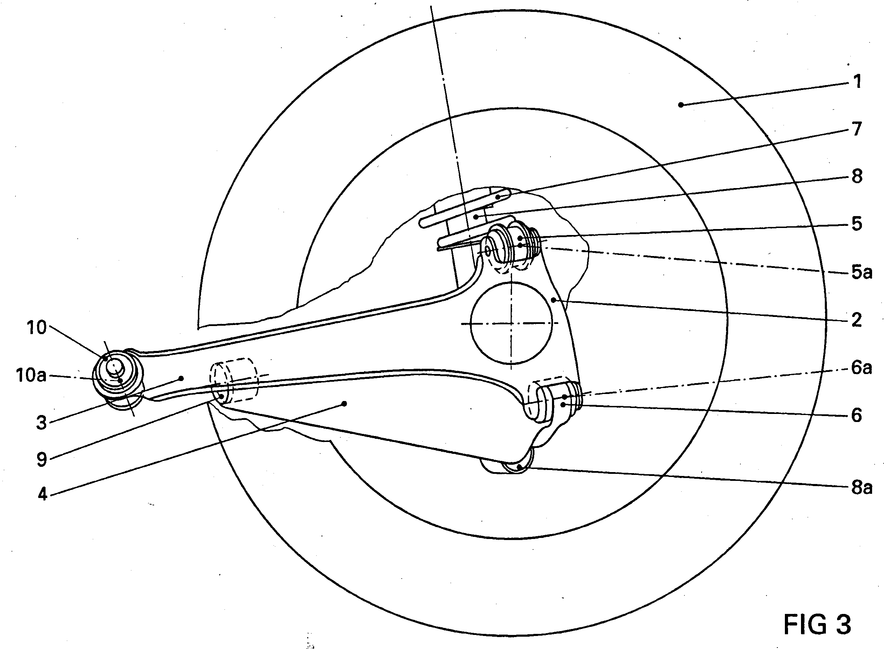

**Figur 3** eine Seitenansicht dieser Einzelradaufhängung.

Dargestellt ist die Radaufhängung eines nicht angetriebenen Hinterrades, worauf die Erfindung jedoch nicht beschränkt ist. Grundsätzlich ist sie auch für die Aufhängung eines angetriebenen
Kfz-Rades geeignet. Das Kfz-Rad 1 ist mit Hilfe eines biege-und verdrehsteifen radführenden Längslenkers 3 sowie eines radführenden Querlenkers 4 über gummielastische Lager 9, 10 schwenkbar am nur prinzipienhaft angedeuteten Fahrzeugaufbau 11 oder einem an diesem in üblicher Weise elastisch befestigten Fahrschemel oder Hilfsrahmen angelenkt, so daß es beim Ein- und Ausfedern um eine mit 12 bezifferte fiktive Schwenkachse geschwenkt wird.

Der radführende Längslenker 3 ist nichtgelenkig mit dem Radträger 2 verbunden, also z. B. einstückig mit diesem ausgebildet oder an diesem angeschraubt oder angeschweißt.

Eine besonders leichte Bauweise ergibt sich, wenn - wie im dargestellten Ausführungsbeispiel - der biege- und drehsteife Längslenker als Blechformteil ausgebildet ist.

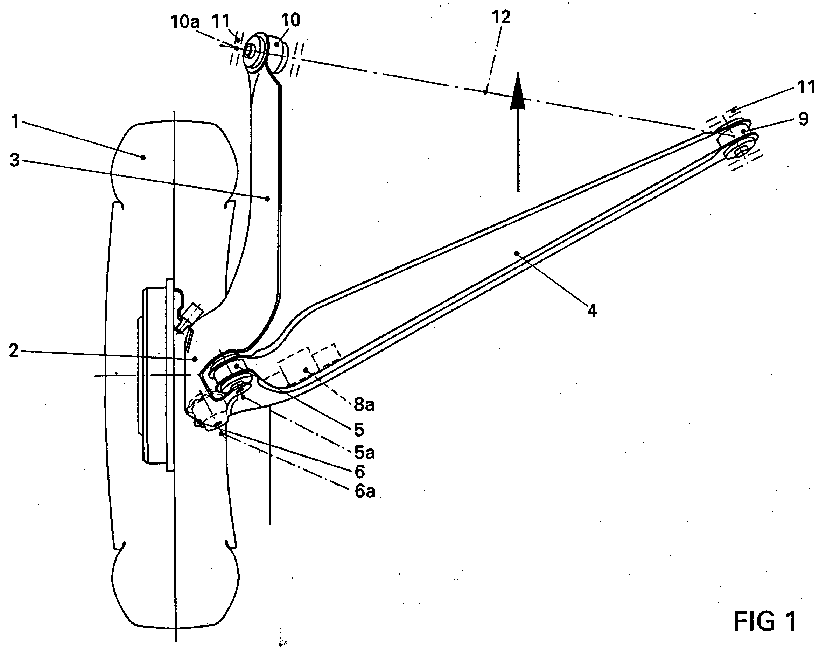

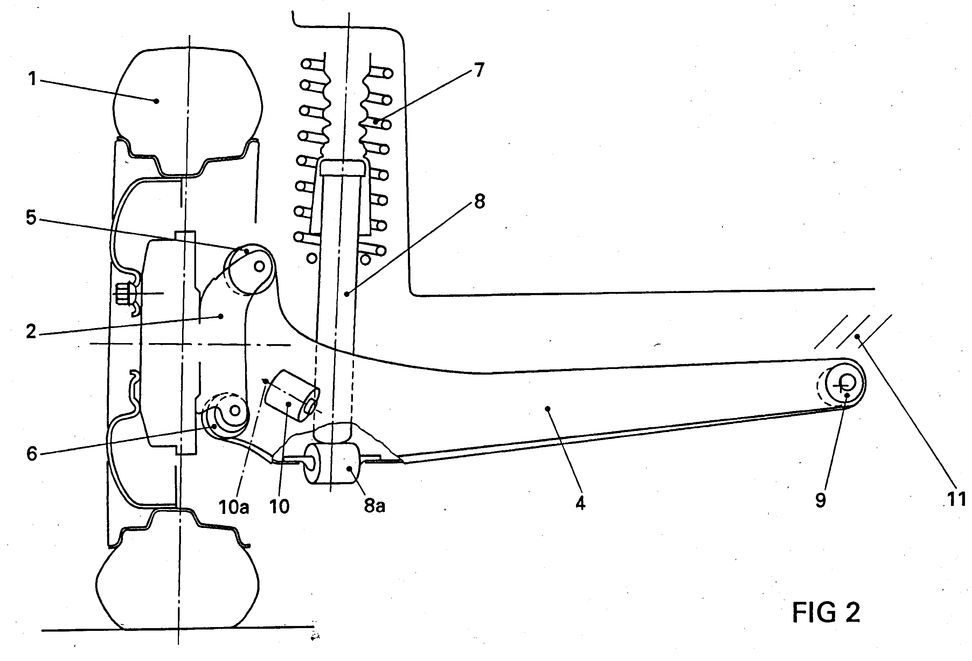

Die radführende Querlenkeranordnung ist nicht in Fahrzeugquerrichtung, sondern stark in Fahrtrichtung (Pfeil) gepfeilt angeordnet. Sie ist durch nur einen einstückigen Querlenker 4 gebildet, der am Fahrzeugaufbau 11 mittels nur eines gummielastischen Lagers 9 angelenkt ist. Radseitig ist er mittels einer sturzabstützenden Lageranordnung in Form zweier in der Querlenkerschwenkebene zueinander beabstandeter gummielastischer Lager 5, 6 mit dem Radträger 2 oder dem radträgerseitigen Ende des Längslenkers 3 verbunden, wobei eine der Fahrzeugfederung dienende Feder-Dämpfer-Vorrichtung in Form eines aus Teleskopstoßdämpfer 8 und Schraubenfeder 7 bestehenden Federdämpfers mit seinem lenkerseitigen Dämpferlager 8a unmittelbar auf dem radführenden Querlenker 4 abgestützt ist, was in Fig. 1 lediglich gestrichelt angedeutet, in Fig. 2 jedoch gut zu erkennen ist.

Für die aufbauseitige Abstützung der radführenden Lenker bzw. deren Lenkerlager 9, 10 werden am Fahrzeugaufbau in vorteilhafter Weise lediglich zwei ausreichend tragfähige Lagerstellenbereiche benötigt, was in diesem Bodenbereich des Fahrzeugaufbaus eine vergleichsweise einfach strukturierte Bauweise ermöglicht.

Im Ausführungsbeispiel sind die in der Querlenkerschwenkebene zueinander beabstandeten radseitigen Lager 5, 6 des Querlenkers 4 als Gummi-Metall-Lager mit zumindest im wesentlichen horizontalen Lagerachsen 5a, 6a ausgebildet, wodurch eine fertigungstechnisch besonders einfach herzustellende Ankopplung des Querlenkers 4 am Radträger 2 gebildet wird. Die Gummielastizitäten der beiden Gummi-Metall-Lager 5, 6 lassen dabei in üblicher Weise gewisse kardanische Relativbewegungen der miteinander gekoppelten Bauelemente zu.

Abweichend vom dargestellten Ausführungsbeispiel ist es aber grundsätzlich auch möglich, die sturzabstützende radseitige Lageranordnung des Querlenkers 4 als Lageranordnung mit zumindest annähernd vertikaler Lagerachse und vergleichsweise großer Lagerbasis auszubilden, z. B. durch Verwendung eines Scharniergelenkes oder aber durch Einsatz zweier im Abstand übereinander angeordneter Einzellager mit fluchtenden Lagerachsen.

Wenn zur schwenkbaren Anlenkung des radführenden Längslenkers 3 am Fahrzeugaufbau 11 wie im Ausführungsbeispiel dargestellt ein Gummi-Metall-Lager 10 vorgesehen und derart angeordnet wird, daß seine in zwei Ebenen schräg angestellte Lagerachse 10a in Fahrtrichtung gesehen (Fig. 2) von außen/oben nach innen/unten und in der Fahrzeugdraufsicht (Fig. 1) von vorn/außen nach hinten/innen verläuft, dann ergibt sich infolge dieser Schrägstellung sowie der Gummielastizität dieses Lagers in vorteilhafter Weise, daß der radführende Längslenker 3 unter der Wirkung von am Rad 1 angreifenden Bremskräften oder bei Kurvenfahrt wirksamen Seitenkräften im aufbauseitigen Lager 10 nach innen verlagert wird, was eine Vorspuränderung in Richtung mehr Vorspur bedeutet.

Dadurch daß die Lagerachse 10a des aufbauseitigen Längslenkerlagers 10 nicht nur in einer Ebene, sondern in vorbeschriebener Weise in zwei Ebenen schräg gestellt ist, werden die vom Rad 1 beim Bremsen sowie bei Kurvenfahrt über den Längslenker 1 ins aufbauseitige Lenkerlager 10 eingeleiteten Kräfte optimal ausgenutzt, um dieses Rad in gewünschter Weise in Vorspur gehen zu lassen, denn sowohl die bei diesen Betriebsverhältnissen im Lenkerlager 10 wirksamen Längskräfte als auch die dort auftretenden Hochkräfte bewirken ja jeweils für sich eine Verlagerung des angelenkten Längslenkerendes nach innen. Durch entsprechende Wahl der Schrägstellung sowie der Gummielastizität bzw. Federkennung des Längslenkerlagers 10 kann so konstruktiv in einfacher Weise auf das Vorspurverhalten des Rades Einfluß genommen werden.

Die erfindungsgemäße Einzelradaufhängung stellt eine sehr wirtschaftlich zu fertigende leichtbauende Radaufhängung dar, die sich durch ein gutes Spur- und Sturzverhalten auszeichnet.

## Patentansprüche

1. Einzelradaufhängung für ein Kfz-Rad (1), insbesondere für ein Hinterrad, mit einem mit einem Radträger (2) nichtgelenkig verbundenen radführenden Längslenker (3), einer in Fahrtrichtung gepfeilt angeordneten radführenden Querlenkeranordnung (4), welche am Längslenker (3) oder am Radträger (2) selbst mittels einer sturzabstützenden Lageranordnung (5, 6) angelenkt ist, sowie mit einer zwischen dem Fahrzeugaufbau (11) und einem der Lenker abgestützten Feder-Dämpfer-Vorrichtung (7, 8), die Querlenkeranordnung durch nur einen einstückigen Querlenker (4) gebildet ist, der am Fahrzeugaufbau (11) mittels nur eines Lagers (9) angelenkt ist, und daß die Feder-Dämpfer-Vorrichtung (7, 8) unmittelbar auf dem radführenden Querlenker (4) abgestützt ist,
**dadurch gekennzeichnet**, daß
der radführende Längslenker (3 biege- und verdrehsteif ausgebildet ist,
zur schwenkbaren Anlenkung des Längslenkers (3) am Fahrzeugaufbau (11) ein Gummi-Metall-Lager (10) mit in zwei Ebenen schrägangestellter Lagerachse (10a) vorgesehen ist, derart, daß sie in Fahrtrichtung gesehen von außen/oben nach innen /unten und in der Fahrseugdraufsicht von vorn/außen nach hinten/innen verläuft, und
die sturzabstützende Lageranordnung des Querlenkers (4) durch zwei in der Querlenkerschwenkebene zueinander beabstandete Lager (5, 6) gebildet ist, vorzugsweise durch zwei Gummi-Metall-Lager mit zumindest im wesentlichen horizontalen Lagerachsen (5a, 6a).

2. Einzelradaufhängung für ein Kfz-Rad (1), insbesondere für ein Hinterrad, mit einem mit einem Radträger (2) nichtgelenkig verbundenen radführenden Längslenker (3), einer in Fahrtrichtung gepfeilt angeordneten radführenden Querlenkeranordnung (4), welche am Längslenker (3) oder am Radträger (2) selbst mittels einer sturzabstützenden Lageranordnung (5, 6) angelenkt ist, sowie mit einer zwischen dem Fahrseugaufbau (11) und einem der Lenker abgestützten Feder-Dämpfer-Vorrichtung (7, 8), die Querlenkeranordnung durch nur einen einstückigen Querlenker (4) gebildet ist, der am Fahrzeugaufbau (11) mittels nur eines Lagers (9) angelenkt ist, und daß die Feder-Dämpfer-Vorrichtung (7, 8) unmittelbar auf dem radführenden Querlenker (4) abgestützt ist,
**dadurch gekennzeichnet**, daß
der radführende Längslenker (3 biege- und verdrehsteif ausgebildet ist,
zur schwenkbaren Anlenkung des Längslenkers (3) am Fahrzeugaufbau (11) ein Gummi-Metall-Lager (10) mit in zwei Ebenen schrägangestellter Lagerachse (10a) vorgesehen ist, derart, daß sie in Fahrtrichtung gesehen von außen/oben nach innen /unten und in der Fahrseugdraufsicht von vorn/außen nach hinten/innen verläuft, und
die sturzabstützende Lageranordnung des Querlenkers (4) als Lageranordnung mit zumindest annähernd vertikaler Lagerachse und größerer Lagerbasis ausgebildet ist.

3. Einzelradaufhängung nach Anspruch 2, **dadurch gekennzeichnet**, daß die Lageranordnung durch zwei zueinander beabstandete Einzellager mit fluchtenden Lagerachsen gebildet ist.

4. Einzelradaufhängung nach Anspruch 2, **dadurch gekennzeichnet**, daß die Lageranordnung durch ein Scharniergelenk gebildet ist.

## Claims

1. Independent suspension for a motor vehicle wheel (1), in particular for a rear wheel, having a wheel-guiding longitudinal connecting rod (3) which is connected in a non-articulated manner to a wheel carrier (2), a wheel-guiding transverse connecting rod arrangement (4) which is disposed backswept in the direction of travel and which is articulated to the longitudinal connecting rod (3) or to the wheel carrier (2) itself by means of a wheel rake-supporting bearing arrangement (5,6) and having a spring-damper device (7,8) which is supported between the vehicle bodywork (11) and one of the connecting rods, the transverse connecting rod arrangement is formed by means of only one one-piece transverse connecting rod (4) which is articulated to the vehicle bodywork (11) by means of only one bearing (9) and that [sic] the spring-damper device (7,8) is supported directly on the wheel-guiding connecting rod (4),
**characterised in that,**
the wheel-guiding longitudinal connecting rod (3) is designed in such a manner as to be resistant to bending and twisting,
to provide a pivotal articulation of the longitudinal connecting rod (3) to the vehicle bodywork (11) a rubber metal bearing (10) is provided with a bearing axis (10a) which is inclined in two planes in such a manner that the said bearing axis extends as seen in the direction of travel from the outside/top in an inwards/downwards direction and in the plan view of the vehicle from the front/outside in a rearwards/inwards direction, and
the wheel rake-supporting bearing arrangement of the transverse connecting rod (4) is formed by two bearings (5,6) which are disposed at a spaced disposition with respect to each other in the transverse connecting rod pivot plane, preferably by two rubber-metal bearings with at last substantially horizontal bearing axes (5a,6a).

2. Independent suspension for a motor vehicle wheel (1), in particular for a rear wheel, having a wheel-guiding longitudinal connecting rod (3) which is connected in a non-articulated manner to a wheel carrier (2), a wheel-guiding transverse connecting rod arrangement (4) which is disposed backswept in the direction of travel, which arrangement is articulated to the longitudinal connecting rod (3) or to the wheel carrier (2) itself by means of a wheel rake-supporting bearing arrangement (5,6), and having a spring-damper device (7,8) which is supported between the vehicle bodywork (11) and one of the connecting rods, the transverse connecting rod arrangement is formed by means of only one one-piece transverse connecting rod (4) which is articulated to the vehicle bodywork (11) by means of only one bearing (9) and that the spring-damper device (7,8) is supported directly on the wheel-guiding transverse connecting rod (4),
**characterised in that,**
the wheel-guiding longitudinal connecting rod (3) is designed in such a manner as to be resistant to bending and twisting,
to provide a pivotal articulation of the longitudinal connecting rod (3) to the vehicle bodywork (11) a rubber-metal bearing (10) is provided with a bearing axis (10a) which is inclined in two planes, in such a manner that the said bearing axis extends as seen in the direction of travel from the outside/top in an inwards/downwards direction and in the plan view of the vehicle from the front/outside in a rearwards/inwards direction, and
the wheel rake-supporting bearing arrangement of the transverse connecting rod (4) is formed as a bearing arrangement with at least one almost vertical bearing axis and greater bearing base.

3. Independent suspension according to claim 2, **characterised in that** the bearing arrangement is formed by means of two individual bearings which are spaced apart from each other and whose bearing axes are in alignment.

4. Independent suspension according to claim 2, **characterised in that** the bearing arrangement is formed by means of a hinged joint.

## Revendications

1. Suspension indépendante d'une roue (1) de véhicule automobile, en particulier d'une roue arrière, comprenant un bras oscillant longitudinal (3) de guidage de la roue qui est relié sans articulation à un support (2) de la roue, une disposition de bras oscillant transversal (4) de guidage de la roue qui est disposée en flèche dans le sens de la marche et qui est articulée sur le bras oscillant longitudinal (3) ou sur le support (2) lui-même de la roue au moyen d'une disposition de support (5, 6) favorisant le carrossage, ainsi qu'un dispositif à ressort-amortisseur (7, 8) prenant appui entre le châssis (11) du véhicule et l'un des bras oscillants, la disposition de bras oscillant transversal étant formée d'un unique bras oscillant transversal monobloc (4) qui est articulé sur le châssis (11) du véhicule au moyen d'un unique support (9) et le dispositif à ressort-amortisseur (7, 8) prenant appui directement sur le bras oscillant transversal (4) de guidage de la roue,
caractérisée en ce que
le bras oscillant longitudinal (3) de guidage de la roue est réalisé de manière à résister à la flexion et à la torsion,
un support en caoutchouc-métal (10) comprenant un axe (10a) du support qui est placé obliquement dans deux plans est prévu pour l'articulation d'oscillation du bras oscillant longitudinal (3) sur le châssis (11) du véhicule de manière à être orienté, observé dans le sens de la marche, de l'extérieur/du haut vers l'intérieur/vers le bas et, en vue en plan du véhicule, de l'avant/de l'extérieur vers l'arrière/vers l'intérieur et
la disposition du support du bras oscillant transversal (4), qui favorise le carrossage, est formée de deux supports (5, 6) placés à distance l'un de l'autre dans le plan d'oscillation du bras oscillant transversal, de préférence de deux supports en caoutchouc-métal ayant des axes de support (5a, 6a) au moins sensiblement horizontaux.

2. Suspension indépendante d'une roue (1) de véhicule automobile, en particulier d'une roue arrière, comprenant un bras oscillant longitudinal (3) de guidage de la roue, qui est relié sans articulation à un support (2) de la roue, une disposition de bras oscillant transversal (4) de guidage de la roue qui est disposée en flèche dans le sens de la marche et qui est articulée sur le bras oscillant longitudinal (3) ou sur le support (2) lui-même de la roue au moyen d'une disposition de support (5, 6) favorisant le carrossage, ainsi qu'un dispositif à ressort-amortisseur (7, 8) prenant appui entre le châssis (11) du véhicule et l'un des bras oscillants, la disposition de bras oscillant transversal étant formée d'un unique bras oscillant transversal monobloc (4) qui est articulé sur le châssis (11) du véhicule au moyen d'un unique support (9) et le dispositif à ressort-amortisseur (7, 8) prenant appui directement sur le bras oscillant transversal (4) de guidage de la roue,
caractérisée en ce que
le bras oscillant longitudinal (3) de guidage de la roue est réalisé de manière à résister à la flexion et à la torsion,
un support (10) en caoutchouc-métal ayant un axe (10a) du support qui est placé obliquement dans deux plans est prévu pour l'articulation d'oscillation du bras oscillant longitudinal (3) sur le châssis (11) du véhicule de manière à être orienté, observé dans le sens de la marche, de l'extérieur/du haut vers l'intérieur/vers le bas et, en vue en plan du véhicule, de l'avant/de l'extérieur vers l'arrière/vers l'intérieur et
la disposition de support du bras oscillant transversal (4), qui favorise le carrossage, est réalisée sous forme de disposition de support ayant un axe du support qui est au moins sensiblement vertical et qui présente une plus grande base du support.

3. Suspension indépendante de roue selon la revendication 2, caractérisée en ce que la disposition de support est formée de deux supports individuels placés à distance l'un de l'autre et ayant des axes de support qui sont à l'alignement.

4. Suspension indépendante de roue selon la revendication 2, caractérisée en ce que la disposition de support est formée d'une articulation à charnière.
